# EUROPEAN PATENT APPLICATION

(11) **EP 4 789 800 A1**
(43) Date of publication of application: **12.08.2026**
(21) Application number: 26155577.5
(22) Date of filing: 30.01.2026
(51) Int. Cl.: B23K 9/04, B23K 15/00, B23K 26/342, B23K 37/06, B22F 10/50, B22F 10/25, B33Y 10/00, B33Y 30/00

(54) **ADDITIVE MANUFACTURING SYSTEM AND METHOD FOR COMPRESSION OF MATERIAL**

(30) Priority: 05.02.2025 PL 45115125; 07.08.2025 US 202519292977
(71) Applicant: GE Aerospace Poland Sp. z o.o., 02-256 Warsaw (PL); General Electric Company, Cincinnati, Ohio 45215 (US); GE Avio S.r.l., 10040 Rivalta di Torino (TO) (IT)
(72) Inventor: PERADOTTO, Edoardo Maria, 10040 Rivalta di Torino (IT); SIBBACH, Arthur William, Evendale, 45215 (US); LASZCZAK, Remigiusz, 02-256 Warsaw (PL)
(74) Representative: Openshaw & Co.

(57) **Abstract**

A directed energy deposition (DED) additive manufacturing system (100) for manufacturing a component (102) from a material includes a deposition assembly (120) having a deposition head (122) through which material is deposited to form a top surface (102c) of a component (102). The top surface (102c) defines a width (w) measured in millimeters (mm). The deposition assembly (120) also includes compression rig (140) having a compression head (246). The compression head (246) is configured to apply a compressive force (F) measured in kilonewtons (kN) to the top surface (102c) of the component (102). The compression rig (140) also defines a target load (Y).

## Description

### FIELD

The present disclosure generally relates to additive manufacturing systems and, more particularly, to additive manufacturing systems and methods that can introduce compression into a deposited material while simultaneously conducting material deposition.

### BACKGROUND

Additive manufacturing is a suite of emerging technologies that may be used to fabricate three-dimensional objects directly from digital models through an additive process, typically by depositing material layer upon layer and joining successive layers in place. Directed energy deposition ("DED") is a type of additive manufacturing process utilized to fabricate new components and/or to repair or add additional material to existing components. Using DED, components can be fabricated layer-by-layer using a directed flow of feedstock material from a deposition nozzle. DED apparatuses use a focused energy source, such as a laser or electron beam, to melt the feedstock material and simultaneously deposit the melted material on a specified surface, where such melted material solidifies and fuses with other deposited materials, to thereby form the component layer-by-layer.

DED apparatuses may also be configured to apply compression to each layer or a set of layers after being deposited. These types of DED apparatuses generally include a compression apparatus to apply compression such as by, for example, peening, hammering, rolling, and the like.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic view of an additive manufacturing system in accordance with an exemplary aspect of the present disclosure.
FIG. 2 is a schematic, front view of a portion of a compression rig of the additive manufacturing system of FIG. 1 in accordance with an exemplary aspect of the present disclosure.
FIG. 3 is a schematic side view of a compression head of FIG. 2 in accordance with an exemplary aspect of the present disclosure.
FIG. 4 is a schematic front view of the compression head of FIG. 2 in accordance with an exemplary aspect of the present disclosure.
FIG. 5A is a partial cross-section view of a component manufactured by the additive manufacturing system of FIG. 1 in accordance with an exemplary aspect of the present disclosure.
FIG. 5B is a partial cross-section view of a component manufactured by the additive manufacturing system of FIG. 1 in accordance with an exemplary aspect of the present disclosure.
FIG. 6 provides a table listing values for various target load characteristics for different example components according to exemplary embodiments of the present disclosure.
FIG. 7 is a flow chart for a method of manufacturing a component using an additive manufacturing system in accordance with an exemplary aspect of the present disclosure.
FIG. 8 is a schematic diagram of the compression head of the additive manufacturing system of FIG. 1 in accordance with an exemplary aspect of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a," "an," and "the" include plural references unless the context clearly dictates otherwise.

The term "at least one of" in the context of, e.g., "at least one of A, B, and C" refers to only A, only B, only C, or any combination of A, B, and C.

The terms "coupled," "fixed," "attached to," and the like refer to both direct coupling, fixing, or attaching, as well as indirect coupling, fixing, or attaching through one or more intermediate components or features, unless otherwise specified herein.

As used herein, the terms "first," "second," and "third" may be used interchangeably to distinguish one component from another and are not intended to signify location or importance of the individual components.

For purposes of the description hereinafter, the terms "upper," "lower," "right," "left," "vertical," "horizontal," "top," "bottom," "lateral," "longitudinal," and derivatives thereof shall relate to the embodiments as they are oriented in the drawing figures. However, it is to be understood that the embodiments may assume various alternative variations, except where expressly specified to the contrary. It is also to be understood that the specific devices illustrated in the attached drawings, and described in the following specification, are simply exemplary embodiments of the disclosure. Hence, specific dimensions and other physical characteristics related to the embodiments disclosed herein are not to be considered as limiting.

The terms "proximate" and "adjacent" refer to being closer to one end, side, or component than an opposite end, side, or component. For example, when used in conjunction with first and second ends or the like, the phrase "proximate the first end," or "adjacent the first end," refers to a location closer to the first end than the second end.

Generally, additive manufacturing systems, such as directed energy deposition ("DED") systems, are used to fabricate new components and/or to repair or add additional material to existing components. Using DED, components can be fabricated layer-by-layer using a directed flow of feedstock material from a deposition nozzle. DED apparatuses use a focused energy source, such as a laser or electron beam, to melt the feedstock material and simultaneously deposit the melted material on a specified surface, where such melted material solidifies and fuses with other deposited materials, to thereby form the component layer-by-layer. However, residual stresses within the component can lead to part failure during or after the manufacturing process. Conventional additive manufacturing processes require such residual stresses to be relieved in subsequent stress relief processes.

The inventors of the present disclosure sought out a means to reduce residual stresses within components formed using additive manufacturing systems, such as DED systems. In particular, the inventors recognized that applying a desired compressive force based on a size of deposited material (such as feedstock material), a type of the material, or both as the material is deposited reduces residual stresses in the component. Reducing such residual stresses allows the subsequent stress relief processes to be avoided, which reduces production time of the component. The inventors discovered, unexpectedly, in the course of designing an additive manufacturing system for reducing residual stresses in the manufactured component that a relationship exists between a compressive force applied to the component during manufacturing and a width of component or, more specifically, a width of the material deposited to form the component.

With a goal of arriving at an improved additive manufacturing system capable of reducing residual stresses in a manufactured component, the inventors proceeded in the manner of designing additive manufacturing systems, such as DED systems, that provide various compressive forces to components having various sizes, or widths; checking an operability of the designed additive manufacturing system; redesigning the additive manufacturing system to vary the noted parameters based on the impact on other aspects of the additive manufacturing system; rechecking the operability of the additive manufacturing system and residual stresses of manufactured components of the redesigned additive manufacturing system; etc. during the design of several different types of additive manufacturing systems, including the additive manufacturing systems described herein, which are described below in greater detail.

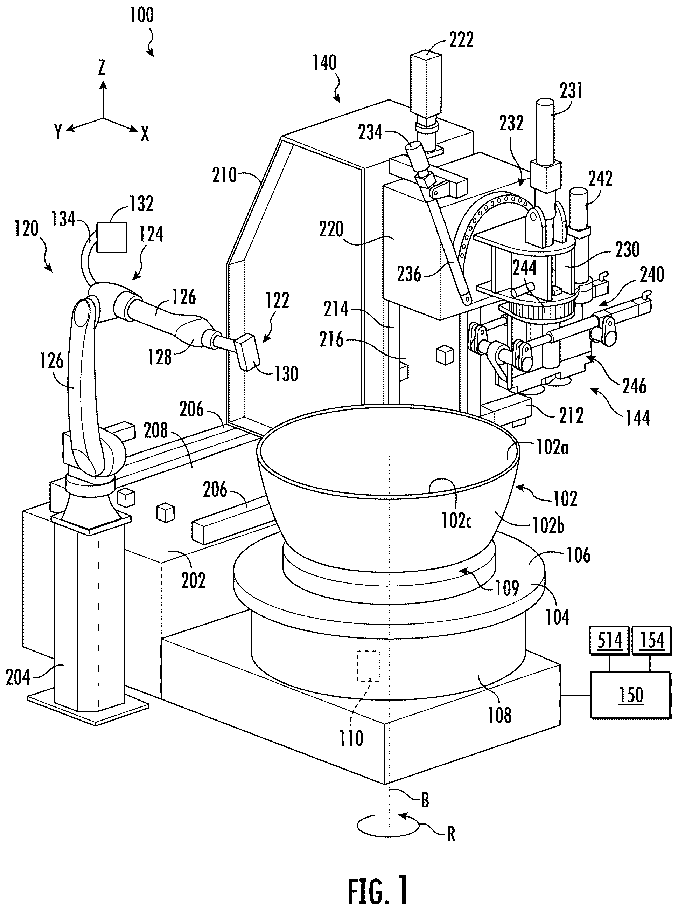

Referring now to the drawings, FIG. 1 is a schematic view of an additive manufacturing system in accordance with an exemplary aspect of the present disclosure. More particularly, FIG. 1 illustrates a DED additive manufacturing system 100 (hereinafter, the system 100) according to one or more embodiments of the present disclosure. The system 100 is configured to construct or build a component 102 from a feedstock material. The manufacturing process using the system 100 may be continuous or include multiple discrete steps. In at least one example embodiment, the component 102 may be a component for an aircraft or gas turbine engine. The component 102 has an interior side surface 102a, an opposite exterior side surface 102b, and a layer or top surface 102c being built. In the illustrated example, the component 102 is a cylindrically shaped component, but in other examples, the component 102 may have a conical, polygonal, or different geometry.

As illustrated, the system 100 includes a build table 104. At least a portion of the build table 104 is configured to rotate about a build table axis B of the build table 104 extending parallel to the Z-axis of the coordinate axis, thereby rotating the component 102 supported on the build table 104. Thus, the build table 104 is a rotary build table. In particular, the build table 104 defines a build surface 106 on which the component 102 is built and supported. In the illustrated embodiment, the build table 104 is disposed on a base 108. The base 108 may include an actuator 110 that rotates the build table 104 about the build table axis B in a clockwise or counterclockwise rotational direction. In the illustrated embodiment, the actuator 110 rotates the build table 104 in a counterclockwise direction R about the build table axis B. Additionally, the actuator 110 may rotate the build table 104 at a variable rotational speed. In some example embodiments, the base 108 is further configured to translate the build table 104 vertically along the build table axis B. As shown in FIG. 1, a platform 109 may be provided on the build surface 106 of the build table 104 and the component 102 may be built on the platform 109 rather than directly on the build surface 106 itself.

The system 100 also includes a deposition assembly 120. The deposition assembly 120 has a deposition head 122 through which a stream of melted feedstock material may be deposited to fabricate the component 102. The melted feedstock material may be deposited or output from the deposition head 122 at a deposition rate. The deposition assembly 120 includes a structure that adjustably and movably supports the deposition head 122. In the illustrated example, the deposition assembly 120 includes a robotic arm 124 including a plurality of links 126 that may articulate relative to each other so as to adjust the position of the deposition head 122 which is supported on a distal most link 128 of the plurality of links 126. Accordingly, it should be understood that the deposition head 122 and the build table 104 are movable relative to each other. For example, the robotic arm 124 may include one or more actuators that rotate the links 126, 128 of the robotic arm 124 relative to one another so as to move the robotic arm 124 and the deposition head 122 supported thereon relative to the build table 104. It will be appreciated that the robotic arm 124 may have various other configurations for moving and adjusting a position of the deposition head 122 in multiple degrees of freedom without departing from the present disclosure.

The deposition assembly 120 includes an energy source 130 and a material source 132. The material source 132 is configured to convey feedstock material (e.g., metal or polymer-based wires) to the deposition head 122 where it is deposited on the build table 104. In the illustrated embodiment, the material source 132 is a material spool and feeder system configured to convey a wire 134 to the deposition head 122. Thus, the material source 132 may house the wire 134 that is fed to the deposition head 122. For example, the wire 134 may be routed externally of the robotic arm 124 to the deposition head 122 or through an internal cavity of the robotic arm 124 that connects to the deposition head 122. In some example embodiments, the wire 134 may be a metal or polymer-based wire. In other example embodiments, rather than being a material spool and feeder system configured to convey the wire 134, the material source 132 may include a pressurized powder source that conveys a pressurized stream of powder feedstock material to one or more material delivery devices (e.g., nozzles, valves, or the like) of the deposition head 122. Any suitable feedstock material capable of being used in DED processes may be used consistent with the present disclosure.

The energy source 130 may take various forms depending on the implementation. For example, the energy source 130 may be an electric arc heat source or a plasma transferred arc heat source. In other example embodiments, the energy source 130 may include a laser source and optics configured to direct a laser beam having a desired energy density to the build surface 106 of the build table 104. In some additional example embodiments, the energy source 130 may include an electron emitter connected to a power supply and at least one focusing coil configured to direct an electron beam to the component 102 being constructed on the build surface 106 of the build table 104. In such embodiments, the build table 104 may be placed in a build chamber (not depicted) under a vacuum or having an oxygen-reduced environment. However, the energy source 130 may take various other forms, such as a plasma source, an electron beam source, a resistance heater, etc.

It should be understood that the system 100 may include any number of energy sources and material sources in accordance with the present disclosure. Additionally, the feedstock material from the material source 132 may be routed to the deposition head 122 in various ways for emission onto the build table 104. For example, in some example embodiments, the wire 134 from the material source 132 may be divided into two or more material feeds that are routed through the robotic arm 124 into the deposition head 122. Each material feed may exit the deposition head 122 at a separate delivery nozzle.

In operation, one or more streams of feedstock material are fed into a path of an energy beam from the energy source 130 and emitted by the deposition head 122 as a stream of melted feedstock. In particular, at points of overlap between the energy beam and the streams of feedstock material where the energy beam possesses the requisite energy density, the energy may heat the feedstock material to a sufficient extent to form a melt pool on the build surface 106. Melted feedstock material may continuously be fed through and deposited from the deposition head 122 such that the melt pool forms a pattern corresponding to the movement pattern of the deposition head 122 and the build table 104. Movements of the deposition head 122 and the build table 104 may be determined based on a desired shape of the component 102 being built such that, as the melt pool cools, the feedstock material solidifies to form a portion of the component 102. For example, rotation of the build table 104 about the build table axis B as the deposition head 122 deposits the melt pool results in a circular shaped stream of melted feedstock material that, as the build table 104 continuously rotates over time, will layer upon itself and build a cylindrical shaped component, such as the component 102. Also, the robotic arm 124 may position the deposition head 122 radially towards or away from the build table axis B so as to create a component with a varying size and diameter as illustrated.

The system 100 further includes a compression rig 140. The compression rig 140 is positioned proximate the deposition assembly 120 and is operable to continuously apply a compressive load to the deposited feedstock material which forms the component 102. As described herein, the compression rig 140 is configured to apply a compressive load to the component 102 (i.e., a compression phase) simultaneously with a deposition phase where the deposition assembly 120 is depositing the stream of melted feedstock material to build the component 102 or separately from the deposition phase. In the illustrated embodiment, the compression rig 140 includes at least one actuator and a load source 144, as further described below.

Generally, the at least one actuator is configured to move and manipulate the orientation of the load source 144 relative to the portion of the component 102 to which a compressive load is to be applied. The load source 144 applies a force to the deposited material to introduce the required strain level in the deposited layer and/or improve mechanical properties of the component 102, for example, grain refinement and recrystallization.

As described herein, the robotic arm 124 is operable to position the deposition head 122 in close proximity of the load source 144 and/or the compression rig 140 is operable to position the load source 144 in close proximity of the deposition head 122. The distance between the load source 144 and the deposition head 122 may be increased if cold rolling is intended, for example, by rotating the build table 104 in an opposite clockwise direction. In this manner, it is possible to operate the deposition head 122 to deposit melted feedstock material in the melt pool while the load source 144 applies the compressive load to the component 102, with the load source 144 trailing the deposition head 122 such that the load source 144 applies load to previously deposited material a short time thereafter depending on the rotation speed of the build table 104. Thus, the compression rig 140 may apply the compressive load to the component 102 at the same time the deposition head 122 is creating the melt pool, at least in close proximity to the melt pool of the component 102. Not only does this decrease machine cycle time, but also allows the compressive load to be applied to the component 102 at a constant temperature and at a temperature suitable to provide the component 102 with forge-like qualities. A grain refinement mechanism responsible for the forge-like properties may be utilized to provide static or dynamic recrystallization. It should be appreciated that cold rolling is capable of producing static recrystallization when the material is first strained, such as at an ambient temperature, and then re-heated with a consequent grain refinement. The re-heat in DED is provided by the most recent layer deposition to the layer(s) below.

In at least one example embodiment, the system 100 may further include a controller 150. The controller 150 may be communicatively coupled to the build table 104, the deposition assembly 120, and/or the compression rig 140. Thus, the controller 150 may be in communication with the base 108, the robotic arm 124, and/or the compression rig 140 so as to control operation of the same. For example, the controller 150 may include a processor and memory storing computer readable instructions which, when executed by the processor, dynamically controls a rotation direction and/or a rotation speed of the build table 104 about the build table axis B, a vertical translation of the build table 104 along the build table axis B, a position and orientation of the deposition head 122 in space via the robotic arm 124, a position and orientation of the load source 144 in space, and/or a magnitude of compressive load applied by the load source 144. The controller 150 may also be configured to control a feed rate of the feedstock material being fed to the deposition head 122 and/or a deposition rate at which the stream of melted feedstock material is output from the deposition head 122.

In some example embodiments, the system 100 may have various sensors configured to communicate with the controller 150, and the controller 150 may utilize data from the various sensors to control operation of the build table 104, the deposition assembly 120, and/or the compression rig 140 as may be desired for fabricating a particular component 102. In some examples, a sensor system (not shown) may be provided that scans the component 102 so as to measure the dimensions of the component 102 as it is being formed. For example, lasers or cameras could be utilized to monitor the geometry of the component 102 and control the orientation of the deposition assembly 120 and/or the compression rig 140 based on that sensed data.

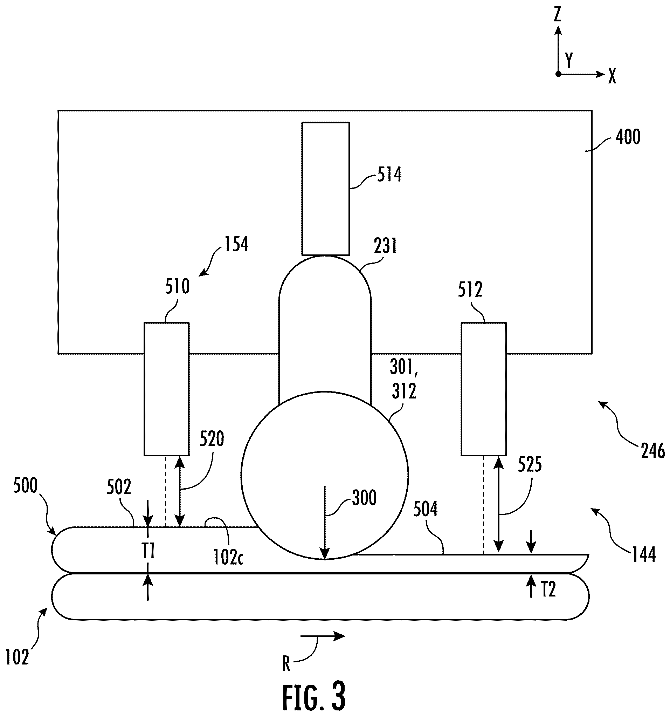

In at least one example embodiment, the system 100 includes one or more sensors, such as a load cell 514 configured to measure a load or compressive force applied to the component 102 and one or more distance sensors 154, which will be discussed with respect to FIG. 3. The load cell 514 is communicably coupled to the controller 150, which includes control logic that evaluates the load or compressive force applied to the component 102, as will be discussed in greater detail herein. For example, the controller 150 is configured to determine if a desired compressive load is being applied to the top surface 102c of the component 102 such that residual strain within the component 102 is minimized. In some example embodiments, the controller 150 may modify various operating parameters of the deposition head 122 to modify the compressive force applied to the component 102 and to reduce strain in the component 102.

In the illustrated example, the deposition head 122 deposits feedstock material to fabricate the component 102 on the build table 104 while the build table 104 rotates in the counterclockwise direction R about the build table axis B. As the build table 104 continues to rotate the component 102 in the counterclockwise direction R, the feedstock material previously deposited by the deposition head 122 will encounter the load source 144 after being deposited from the deposition head 122. Thus, in the illustrated embodiment, the deposition head 122 acts on a particular portion of the component 102 before the load source 144 acts on that particular portion of the component 102 and, similarly, the load source 144 acts on a particular portion of the component 102 after the deposition head 122 has acted on that particular portion of the component 102. Stated differently, because the build table 104 rotates in the counterclockwise direction R in the illustrated embodiment, the deposition head 122 is positioned before the load source 144 and the load source 144 is positioned after the deposition head 122.

In the illustrated example, the compression rig 140 is provided on a base 202, which is positioned proximate to the deposition assembly 120 and the build table 104, and the deposition assembly 120 is provided on a pedestal 204. In other examples, the deposition assembly 120 may be provided on the base 202 or elsewhere.

At least one pair of tracks 206 may be provided on an upper surface 208 of the base 202. The compression rig 140 may include a slidable support structure 210 that is configured to slide upon the tracks 206. As shown, the slidable support structure 210 may translate on the tracks 206, relative to the base 202, laterally in the Y-axis. Also, the compression rig 140 includes an actuator 212 arranged to cause translation of the slidable support structure 210 upon the tracks 206 in the Y-axis. Accordingly, the slidable support structure 210 has a bottom side (obscured from view) that is designed to mate with and ride on the tracks 206 to allow such translation.

Additionally, at least one pair of tracks 214 may be provided on a front surface 216 of the slidable support structure 210. The compression rig 140 may include a slidable positioning structure 220 that is configured to slide upon the tracks 214. As shown, the slidable positioning structure 220 may translate on the tracks 214, relative to the slidable support structure 210, vertically in the Z-axis. Also, the compression rig 140 includes an actuator 222 arranged to cause translation of the slidable positioning structure 220 upon the tracks 214 in the Z-axis. Accordingly, the slidable positioning structure 220 has a rear side (obscured from view) that is designed to mate with and ride on the tracks 214 to allow such translation.

In at least one example embodiment, the compression rig 140 includes an adjustable support member 230 that supports a compression head 246, as discussed herein. The adjustable support member 230 is coupled to the slidable positioning structure 220 via a first rotary joint 232. The first rotary joint 232 includes a first side/plate attached to the slidable positioning structure 220 and a second side/plate attached to the adjustable support member 230, and the first rotary joint 232 is configured to permit relative rotation between the first and second sides/plates, about an axis of rotation of the first rotary joint 232. Accordingly, the adjustable support member 230 may rotate, relative to the slidable positioning structure 220, about a rotation axis of the first rotary joint 232 that, in the illustrated example, is parallel to the X-axis.

The compression rig 140 may include an actuator 234 arranged to cause rotation of the adjustable support member 230 about the rotation axis of the first rotary joint 232. In the illustrated example, the actuator 234 is supported on the slidable positioning structure 220. The actuator 234 includes a drive rod 236 and actuation of the actuator 234 causes extension or retraction of the drive rod 236 from the actuator 234. A distal end of the drive rod 236 is coupled to the second side/plate of the first rotary joint 232. Accordingly, extension or retraction of the drive rod 236 causes relative rotation between the first and second sides/plates of the first rotary joint 232 which thereby causes rotation of the adjustable support member 230 relative to the slidable positioning structure 220.

The compression head 246 is coupled to the adjustable support member 230 via a second rotary joint 240. The second rotary joint 240 defines an axis of rotation that, in the illustrated example, is parallel to Z-axis. The second rotary joint 240 includes a first side/plate attached to the adjustable support member 230 and a second side/plate attached to the compression head 246, and the second rotary joint 240 is configured to permit relative rotation between the first and second sides/plates, about its axis of rotation. Accordingly, the compression head 246 may rotate, relative to adjustable support member 230, about the rotation axis of the second rotary joint 240. Also, the compression rig 140 includes an actuator 242 arranged to cause rotation of the compression head 246 about the rotation axis of the second rotary joint 240. In the illustrated example, the actuator 242 is supported on the adjustable support member 230, and the actuator 242 includes a drive gear (obscured from view) having teeth that mesh with a driven gear 244 fixed on the second side/plate of the second rotary joint 240. The actuator 242 causes rotation of the drive gear, and rotation of the drive gear in turn rotates the driven gear 244 and the compression head 246 which is fixed to the driven gear 244.

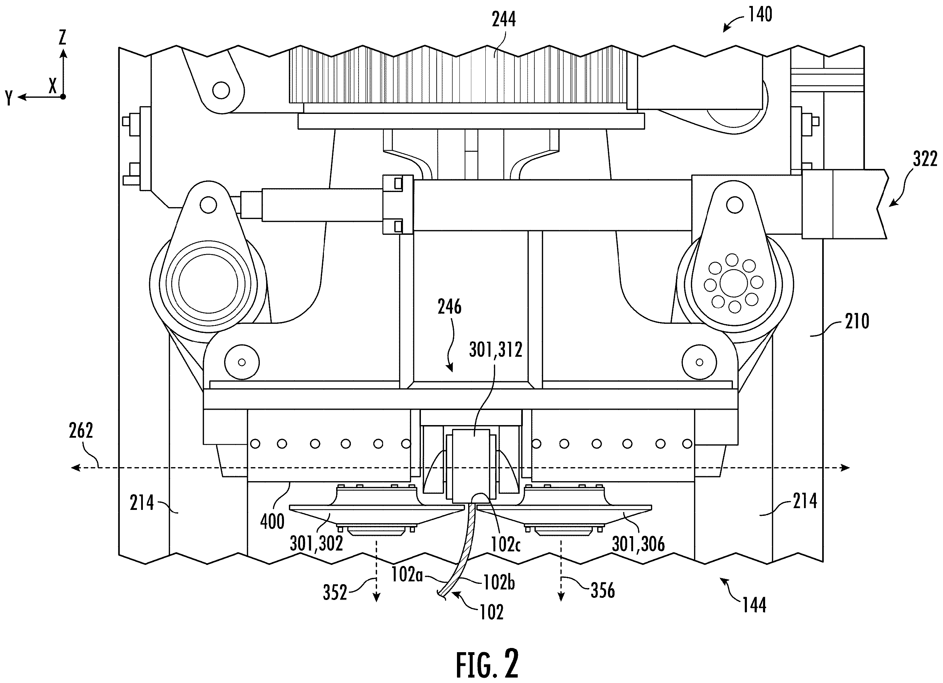

FIG. 2 is a schematic, front view of a portion of the compression rig 140 including the compression head 246 of the system 100 of FIG. 1 in accordance with an exemplary aspect of the present disclosure.

The load source 144 includes at least one compression device, such as at least one roller 301, arranged to apply compressive load to the component 102 (shown in section) at one or more locations on the component 102. Each roller of the at least one roller 301 may be made of the same differing hardness materials suited for a particular application. Each roller of the at least one roller 301 may have the same or differing shapes suited for a particular application. For example, matching a shape of the at least one roller 301 to a shape of the component 102 can result in a more even application of pressure.

The compression head 246 may also be configured to rotatably retain the at least one roller 301 at various orientations so as to roll upon certain portions of the component 102. In some example embodiments, as described in more detail herein, the compression head 246 is configured to measure the compressive load applied by each of the at least one rollers 301 through one or more sensors, such as the load cell 514 (FIG. 1), operably associated with the at least one roller 301.

In at least one example embodiment, the at least one roller 301 includes an inside roller 302 positioned and oriented to contact the interior side surface 102a of the component 102 and to roll there-along as the component 102 is rotated by the build table 104 (FIG. 1). The at least one roller 301 may also include an outside roller 306 positioned and oriented to contact the exterior side surface 102b of the component 102 and to roll there-along as the component 102 is rotated by the build table 104. In the illustrated example, the inside roller 302 and the outside roller 306 are oriented such that they are each rotatable about a respective axis of rotation 352, 356 extending in the Z-axis. However, it will be appreciated that the inside roller 302 and the outside roller 306 may rotate about axes oriented along different vectors in the X-Z plane.

The at least one roller 301 of the compression head 246 also supports at least one top compression device, such as a top roller 312, positioned and oriented to contact the top surface 102c of the component 102 and to roll there-along as the component 102 is rotated by the build table 104. It should be understood that use of the term "top surface" refers to an uppermost surface or layer of the component 102. As such, the top surface 102c of the component 102 is continually changing with each successive layer of material deposited by the deposition head 122 (FIG. 1). As shown in FIG. 2, the top roller 312 is oriented such that it is rotatable about an axis extending in the Y-axis direction. However, it will be appreciated that the inside roller 302, the outside roller 306, and the top roller 312 may rotate about axes oriented along different vectors in the X-Z plane.

The top roller 312 may provide compression to the top surface 102c of the component 102 via actuation of a linear actuator 231 (FIG. 1) which may be operated to drive the top roller 312 toward the component 102, for example, in the Z-axis. In some example embodiments, the linear actuator 231 extends through an aperture formed in the compression head 246 to permit the top roller 312 to move in the Z-axis relative to the inside roller 302 and the outside roller 306. Thus, the inside roller 302 and the outside roller 306 pinch the opposite sides of the component 102 via lateral compression while the top roller 312 presses the top surface 102c of the component 102 via vertical compression. In additional example embodiments, load sensors, such as the load cell 514, may be operatively associated with each of the inside roller 302, the outside roller 306 and the top roller 312, so as to determine the load or compressive force applied thereby.

In the illustrated example, the compression head 246 includes a frame 400 configured to support the at least one roller 301, including the inside roller 302, the outside roller 306 and the top roller 312. The frame 400 is fixed to the driven gear 244 such that it rotates with the driven gear 244 upon actuation of the actuator 242 (FIG. 1) as described above. As shown, the inside roller 302 and the outside roller 306 are each rotatably coupled to the frame 400 such that each of the inside roller 302 and the outside roller 306 may rotate about the respective axis of rotation 352, 356. Also, as discussed in more detail herein, the inside roller 302 and the outside roller 306 may be pinched together or expanded apart along an axis 262 which extends parallel to the Y-axis via one or more compression actuators 322 supported on the frame 400. In addition, the top roller 312 may be pressed upward or downward in a direction parallel with the axes of rotation 352, 356 via the linear actuator 231 (FIG. 1) which may be supported on the adjustable support member 230 (FIG. 1). Additionally, the axis 262 is offset and may be perpendicular to the axes of rotation 352, 356.

Each of the inside roller 302, the outside roller 306 and the top roller 312 are freely rotatable about their respective axes of rotation 352, 356, 262, and they are each rotated when brought into contact with their respective portion of the component 102 that they are designed to contact (i.e., the interior side surface 102a, the exterior side surface 102b, and the top surface 102c of the component 102, respectively) and as the component 102 is rotated. Thus, rotation of the component 102 causes roller rotation and the rollers need not include any separate drive train(s) to cause their independent rotation. However, in some examples, any one or more of the inside roller 302, the outside roller 306 and the top roller 312 may be powered.

As discussed herein, the inside roller 302, the outside roller 306 and the top roller 312 may each be configured to apply a compressive load to a respective portion of the component 102. For example, a first compression actuator may be configured to move the inside roller 302 toward the outside roller 306 and the interior side surface 102a of the component 102, and a second compression actuator may be configured to move the outside roller 306 toward the inside roller 302 and the exterior side surface 102b of the component 102. In some example embodiments, the compression actuators cause movement of the respective inside roller 302 and outside roller 306 independent of each other such that, for example, the inside roller 302 could be moved toward the outside roller 306 without a corresponding movement of the outside roller 306 toward the inside roller 302, and vice versa. In some additional example embodiments, the compression actuator 322 operates to cause simultaneous movement of the inside roller 302 and the outside roller 306 together with corresponding movements toward the component 102, thereby pinching the component 102, and causing the inside roller 302 and the outside roller 306 to move apart from each other in unison with corresponding movements away from the component 102. In at least one example embodiment, where the inside roller 302 and the outside roller 306 operate in unison to move towards each other and away from each other, the compression actuator 322 may operate to pinch the inside roller 302 and the outside roller 306 together so as to enhance pinching compression force.

It should be appreciated that, in embodiments, the top roller 312 may be positioned directly above a gap provided between the inside roller 302 and the outside roller 306 such that the top roller 312, the inside roller 302, and the outside roller 306 simultaneously act on the same portion of the component 102. However, in other example embodiments, the top roller 312 may be positioned offset from the gap provided between the inside roller 302 and the outside roller 306.

In other example embodiments, the at least one compression device of the load source 144 may include hydraulics, an electric solenoid, or a pneumatic hammer for applying the compressive force to the component 102.

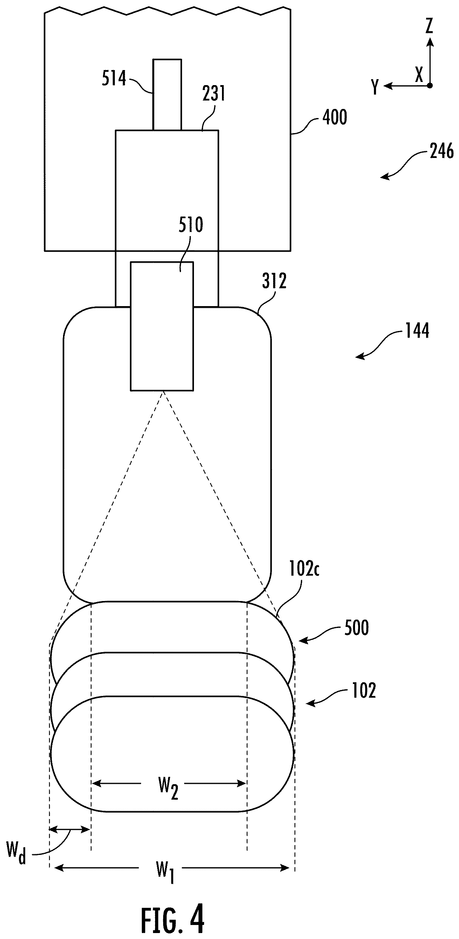

FIG. 3 is a schematic side view of the compression head 246 of FIG. 2 in accordance with an exemplary aspect of the present disclosure. FIG. 4 is a schematic front view of the compression head 246 of FIG. 2 in accordance with an exemplary aspect of the present disclosure. More specifically, FIGS. 3-4 illustrate the top roller 312, which is movably positionable along the Z-axis by the linear actuator 231.

As shown in FIG. 3, the top roller 312 applies a compressive force 300, indicated by arrow 300, against a top layer 500 defining the top surface 102c of the component 102 as the component 102 rotates in the counterclockwise direction R. Accordingly, a first thickness T1 of a first portion 502 of the top layer 500 located forward of the top roller 312, i.e., before the compression force is applied, is greater than a second thickness T2 of a second portion 504 of the top layer 500 located rearward of the top roller 312, i.e., after the compressive force is applied. As used herein, the terms "forward" or "in front of" refer to a position in the same direction as a rotating direction of the build table 104 such as, for example, the counterclockwise direction R in the present embodiment, i.e., downstream. Similarly, the terms "rearward" or "behind" refer to a position opposite the rotating direction of the build table 104, i.e., upstream.

In at least one example embodiment, the load cell 514 is provided for detecting the load, or the compressive force 300, applied on the top surface 102c of the component 102 by the top roller 312 via the linear actuator 231. The load cell 514 may be integrated into the linear actuator 231, provided at a location between the linear actuator 231 and the top roller 312, or at any other suitable location for detecting a load applied to the top surface 102c of the component 102 by the top roller 312. The load cell 514 transmits a signal indicating the load applied to the top surface 102c of the component 102 by the top roller 312 to the controller 150. Either continually or after a predetermined period of time, the load cell 514 may transmit additional signals to the controller 150 including an updated load. Thus, the load cell 514 may transmit a plurality of signals to the controller 150 each including an updated load.

As discussed herein, the linear actuator 231 may be adjusted in response to the controller 150 determining that the load, or the compressive force 300, applied to the top surface 102c of the top layer 500, of the component 102 is less than or exceeds a desired range for the compressive force 300. As the linear actuator 231 is operated to adjust the vertical position of the top roller 312 relative to the top layer 500, the load cell 514 will detect a compressive force applied onto the top roller 312 and thus onto the top layer 500. When the controller 150 determines that the desired compressive force on the top roller 312 and the top layer 500 is achieved, the linear actuator 231 may be deactivated.

In at least one example embodiment, one or more distance sensors 154 may be provided for measuring a distance to the component 102. For example, the one or more distance sensors 154 include a first distance sensor 510 positioned forward of the top roller 312 and a second distance sensor 512 positioned rearward of the top roller 312. The first distance sensor 510 is supported by the frame 400 and oriented to detect a first distance 520 to the first portion 502 of the of the top layer 500 prior to the top roller 312 applying a compression force against the top layer 500. The second distance sensor 512 is supported by the frame 400 and oriented to detect a second distance 525 to the second portion 504 of the of the top layer 500 after the top roller 312 applies a compression force against the top layer 500.

The first distance sensor 510 transmits a signal indicating the first distance 520 to the controller 150. Either continually or after a predetermined period of time, the first distance sensor 510 may transmit additional signals to the controller 150 indicating an updated first distance 520. Thus, the first distance sensor 510 may transmit a plurality of signals to the controller 150 each indicating an updated first distance 520. Similarly, the second distance sensor 512 transmits a signal indicating the second distance 525 to the controller 150. Either continually or after a predetermined period of time, the second distance sensor 512 may transmit additional signals to the controller 150 indicating an updated second distance 525. Thus, the second distance sensor 512 may transmit a plurality of signals to the controller 150 each indicating the updated second distance 525.

In addition to the first distance sensor 510 and the second distance sensor 512 detecting a distance to the top layer 500 of the component 102, the first distance sensor 510 and the second distance sensor 512 may also be configured to detect a width of the top layer 500 of the component 102. With reference to FIG. 4, the first distance sensor 510 and the second distance sensor 512 (FIG. 3) may be configured to detect a total width W₁ of the top layer 500 and a contact width W₂ of the top layer 500, the contact width W₂ of the top layer 500 being a width of the top layer 500 that is contacted by the top roller 312. The total width W₁ and contact width W₂ are each measured in a cross-wise direction of the top layer 500 (i.e., a direction perpendicular to a direction in which the top layer 500 is deposited). The contact width W₂ of the top layer 500 may be subtracted from the total width W₁ of the top layer 500 to determine a total width difference, which is equal to two times a width difference W_{d}. The width difference W_{d} detected by the first distance sensor 510 may then be compared to the width difference W_{d} detected by the second distance sensor 512 to determine an amount of deformation of the top layer 500 which, in turn, can be used as an estimate of the strain. Accordingly, the linear actuator 231 may be adjusted to ensure that one or both of the width difference W_{d} and the contact width W₂ remains within a desired width range to reduce residual strain within the component 102.

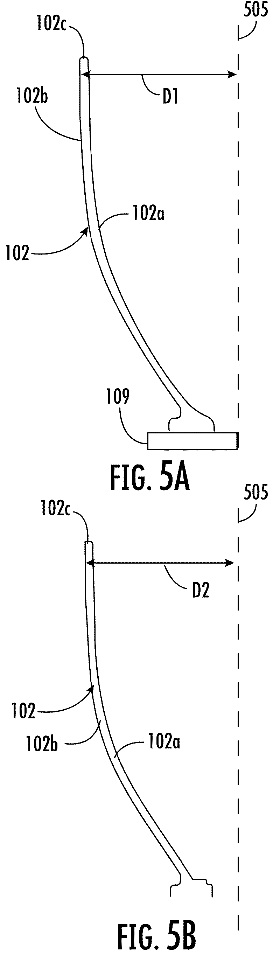

FIG. 5A is a partial cross-sectional view of the component 102 manufactured by the system 100 of FIG. 1 in accordance with an exemplary aspect of the present disclosure. FIG. 5B is a partial cross-sectional view of the component 102 manufactured by the system 100 of FIG. 1 in accordance with an exemplary aspect of the present disclosure. More particularly, FIG. 5A illustrates the component 102 attached to the platform 109 and FIG. 5B illustrates the component 102 removed from the platform 109.

In at least one example embodiment, the component 102 defines a first distance D1 extending between the exterior side surface 102b of the component 102 and a reference line 505 extending perpendicular a surface of the platform 109 when the component 102 is mounted on the platform 109. For example, the reference line 505 extends parallel to the build table axis B (FIG. 1). Additionally, the component 102 defines a second distance D2 extending between the exterior side surface 102b of the component 102 and the reference line 505 extending perpendicular a surface of the platform 109 when the component 102 is removed from the platform 109. The first distance D1 and the second distance D2 are measured at the same location along a height of the component 102 extending along the reference line 505. A difference between the first distance D1 and the second distance D2 defines an amount of deformation of the component 102 after the component 102 is removed from the platform 109 due to residual stresses within the component 102. The amount of deformation can be used to determine a percent of deformation when the component 102 is removed from the platform 109. For example, the percent of deformation may be represented mathematically as $\frac{{D}_{1} - {D}_{2}}{{D}_{1}}$. The percent of deformation of the component may be reduced by reducing residual stresses in the component 102, which may be achieved by applying the compressive force 300 (FIG. 3) to the top surface 102c of top layer 500 (FIG. 3) during manufacturing of the component 102. In at least one example embodiment, the percent of deformation of the component 102 is less than or equal to 0.05 (5%). More specifically, the percent of deformation of the component 102 may be less than or equal to 0.01 (1%).

As alluded to earlier, the inventors discovered, unexpectedly during the course of designing a DED system for reducing residual stresses within manufactured components - i.e., designing DED systems with various compressive forces applied to the component during manufacturing and widths of the component, and evaluating residual stresses of the manufactured component - a significant relationship between compressive force and a width of deposited material forming a top layer of the component. The relationship can be thought of as an indicator of the ability of a DED system to reduce residual stresses within a manufactured component. The relationship is represented by a target load per unit length ("target load") exerted on a surface of a component being manufactured by an additive manufacturing system, such as a DED system.

The target load is determined by dividing a force applied by a pressing device onto a deposited bead of material, such as the feedstock material discussed herein, used for manufacturing a component by a width of the deposited bead of material. The ranges for the target load provided herein ensure minimal residual stresses remain in the component after manufacturing. For example, going below the provided range for the target load results in an insufficient strain applied to the component such that residual stresses within the component are insufficiently reduced. Additionally, going above the provided range for the target load increases the likelihood of a part failure, such as a crack. Accordingly, the ranges for the target load provided herein reflect a DED system that reduces residual stresses, which in turn reduce a deformation of the component after manufacturing, which reduces post-processing requirements and increases yield.

The desired relationship provided for the DED system, discovered by the inventors, is a target load per unit length Y ("target load Y"), expressed as: $Y = \frac{F}{w}$

The target load Y is measured in kilonewtons per millimeter (kN/mm) and relates a compressive force F applied to the top surface 102c of the top layer 500 of the component 102 by the deposition head 122 and a width w of the material forming the top surface 102c of the top layer 500 of the component 102. In at least one example embodiment, the target load Y is greater than or equal to 4 kN/mm and less than or equal to 19 kN/mm. More specifically, the target load Y may be greater than or equal to 5 kN/mm and less than or equal to 14 kN/mm.

More specifically, the compressive force F of (1) measures the maximum force applied to the top surface 102c of the top layer 500 of the component 102 by the deposition head 122 in kilonewtons (kN). For example, the compressive force F is the compressive force 300 applied to the top surface 102c of the top layer 500 of the component 102 by the top roller 312. In at least one example embodiment, the compressive force F is greater than or equal to 30 kN and less than or equal to 200 kN. More specifically, the compressive force F may be greater than or equal to 50 kN and less than or equal to 150 kN.

The width w of (1) measures a total width of the deposited material forming the top layer 500 of the component 102 in millimeters (mm). For example, the width w may be the total width W₁ of the top layer 500 of the component 102, as discussed with respect to FIG. 4. In at least one example embodiment, the width w is greater than or equal to 6 mm and less than or equal to 15 mm. More specifically, the width w may be greater than or equal to 8 mm and less than or equal to 12 mm.

Values for various target load characteristics defined by expression (1) are set forth in TABLE 1:

| **TABLE 1** | | |
|---|---|---|
| **Symbol** | **Description** | **Ranges appropriate for using in Expression (1)** |
| *Y* | Target load per unit length | 4 kN/mm to 19 kN/mm, such as 5 kN/mm to 14 kN/mm |
| *F* | Compressive force | 30 kN to 200 kN, such as 50 kN to 150 kN |
| *w* | width | 6 mm to 15 mm, such as 8 mm to 12 mm |

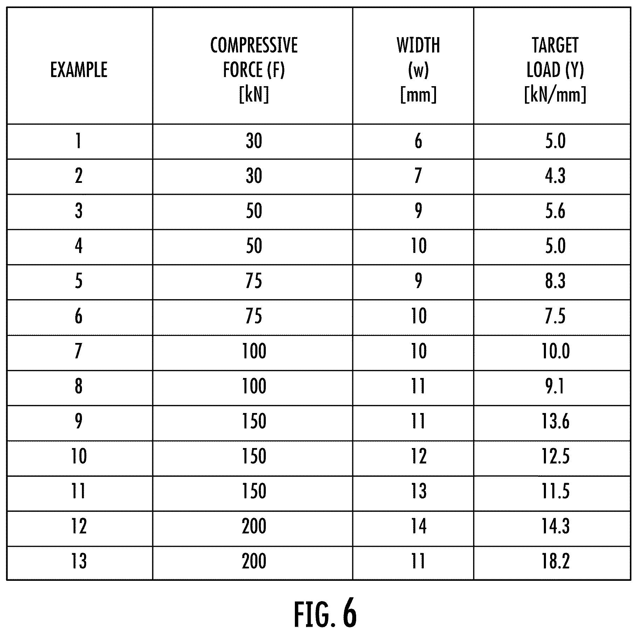

FIG. 6 provides a table listing values for various target load characteristics for different example components according to exemplary embodiments of the present disclosure.

EXAMPLE 1: In a first example, the compressive force F applied to the component 102, such as to the top surface 102c of the top layer 500, by the compression head 246, and more particularly by the top roller 312, is 30 kN. The width w of the material deposited and forming the top surface 102c of the top layer 500 is 6 mm. Accordingly, the target load Y is 5 kN/mm.

EXAMPLE 2: In a second example, the compressive force F applied to the component 102, such as to the top surface 102c of the top layer 500, by the compression head 246, and more particularly by the top roller 312, is 30 kN. The width w of the material deposited and forming the top surface 102c of the top layer 500 is 7 mm. Accordingly, the target load Y is 4.3 kN/mm.

EXAMPLE 3: In a third example, the compressive force F applied to the component 102, such as to the top surface 102c of the top layer 500, by the compression head 246, and more particularly by the top roller 312, is 50 kN. The width w of the material deposited and forming the top surface 102c of the top layer 500 is 9 mm. Accordingly, the target load Y is 5.6 kN/mm.

EXAMPLE 4: In a fourth example, the compressive force F applied to the component 102, such as to the top surface 102c of the top layer 500, by the compression head 246, and more particularly by the top roller 312, is 50 kN. The width w of the material deposited and forming the top surface 102c of the top layer 500 is 10 mm. Accordingly, the target load Y is 5 kN/mm.

EXAMPLE 5: In a fifth example, the compressive force F applied to the component 102, such as to the top surface 102c of the top layer 500, by the compression head 246, and more particularly by the top roller 312, is 75 kN. The width w of the material deposited and forming the top surface 102c of the top layer 500 is 9 mm. Accordingly, the target load Y is 8.3 kN/mm.

EXAMPLE 6: In a sixth example, the compressive force F applied to the component 102, such as to the top surface 102c of the top layer 500, by the compression head 246, and more particularly by the top roller 312, is 75 kN. The width w of the material deposited and forming the top surface 102c of the top layer 500 is 10 mm. Accordingly, the target load Y is 7.5 kN/mm.

EXAMPLE 7: In a seventh example, the compressive force F applied to the component 102, such as to the top surface 102c of the top layer 500, by the compression head 246, and more particularly by the top roller 312, is 100 kN. The width w of the material deposited and forming the top surface 102c of the top layer 500 is 10 mm. Accordingly, the target load Y is 10 kN/mm.

EXAMPLE 8: In an eighth example, the compressive force F applied to the component 102, such as to the top surface 102c of the top layer 500, by the compression head 246, and more particularly by the top roller 312, is 100 kN. The width w of the material deposited and forming the top surface 102c or the top layer 500 is 11 mm. Accordingly, the target load Y is 9.1 kN/mm.

EXAMPLE 9: In a ninth example, the compressive force F applied to the component 102, such as to the top surface 102c of the top layer 500, by the compression head 246, and more particularly by the top roller 312, is 150 kN. The width w of the material deposited and forming the top surface 102c of the top layer 500 is 11 mm. Accordingly, the target load Y is 13.6 kN/mm.

EXAMPLE 10: In a tenth example, the compressive force F applied to the component 102, such as to the top surface 102c of the top layer 500, by the compression head 246, and more particularly by the top roller 312, is 150 kN. The width w of the material deposited and forming the top surface 102c of the top layer 500 is 12 mm. Accordingly, the target load Y is 12.5 kN/mm.

EXAMPLE 11: In an eleventh example, the compressive force F applied to the component 102, such as to the top surface 102c of the top layer 500, by the compression head 246, and more particularly by the top roller 312, is 150 kN. The width w of the material deposited and forming the top surface 102c of the top layer 500 is 13 mm. Accordingly, the target load Y is 11.5 kN/mm.

EXAMPLE 12: In a twelfth example, the compressive force F applied to the component 102, such as to the top surface 102c of the top layer 500, by the compression head 246, and more particularly by the top roller 312, is 200 kN. The width w of the material deposited and forming the top surface 102c of the top layer 500 is 14 mm. Accordingly, the target load Y is 14.3 kN/mm.

EXAMPLE 13: In a thirteenth example, the compressive force F applied to the component 102, such as to the top surface 102c of the top layer 500, by the compression head 246, and more particularly by the top roller 312, is 200 kN. The width w of the material deposited and forming the top surface 102c of the top layer 500 is 11 mm. Accordingly, the target load Y is 18.2 kN/mm.

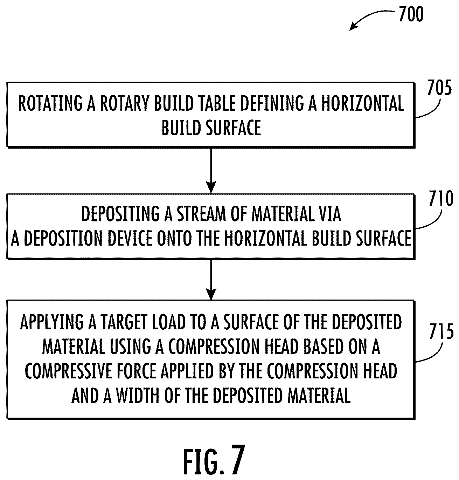

FIG. 7 is a flow chart for a method 700 of manufacturing a component using an additive manufacturing system in accordance with an exemplary aspect of the present disclosure. For example, the method 700 may be implemented by the controller 150 (FIG. 1).

In at least one example embodiment, the method 700 includes rotating a rotary build table defining a horizontal build surface at 705, depositing a stream of material, such as feedstock material, via a deposition device onto the horizontal build surface at 710, and applying a target load to a surface of the deposited material using a compression head based on a compressive force applied by the compression head and a width of the deposited material at 715.

Rotating a rotary build table defining a horizontal build surface at 705 may include rotating the build table 104, as discussed with respect to FIG. 1. For example, the actuator 110 may rotate the build table 104 in the counterclockwise direction R about the build table axis B. In other example embodiments, the actuator 110 may rotate the build table 104 in a clockwise direction about the build table axis B.

Depositing a stream of material via a deposition device onto the horizontal build surface at 710 includes depositing the stream of melted material from the deposition head 122 to fabricate the component 102, as discussed with respect to FIG. 1.

Applying a target load to a surface of the deposited material using a compression head based on a compressive force applied by the compression head and a width of the deposited material at 715 includes applying a compressive load to a surface of the component 102 using the compression rig 140, as discussed with respect to FIGS. 1-4. For example, the load source 144, such as the at least one roller 301, applies the compressive load to the component 102 at one or more locations of the component 102. As discussed with respect to FIG. 3, at least the top roller 312 applies the compressive force 300 to the top surface 102c of the top layer 500 of the component 102. For example, applying the target load at 715 includes rolling the top surface 102c with the top roller 312. Moreover, one or both of the inside roller 302 and the outside roller 306 may apply a compressive load to the interior side surface 102a and the exterior side surface 102b of the component 102, respectively.

In at least one example embodiment, the target load applied to the surface of the material at 715 may be the target load Y, discussed with respect to expression (1). For example, the target load Y may be greater than or equal to 4 kN/mm and less than or equal to 19 kN/mm. In such example embodiments, the target load Y may be based on the compressive force F being greater than or equal to 30 kN and less than or equal to 200 kN and the width w being greater than or equal to 6 mm and less than or equal to 15 mm.

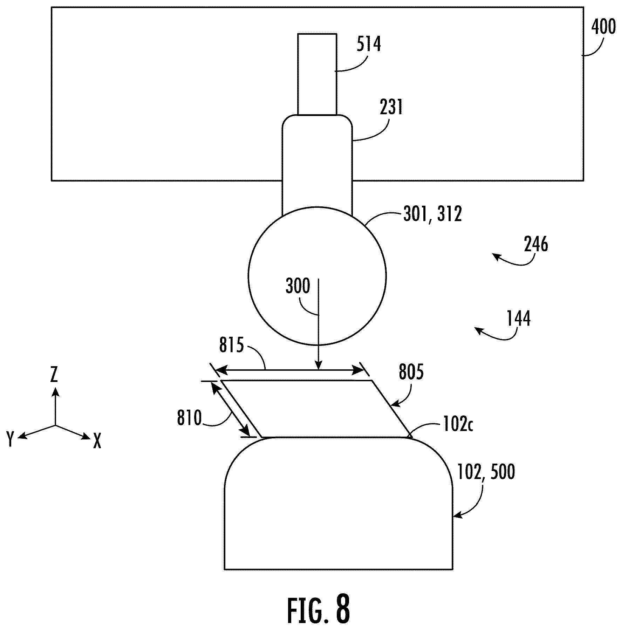

FIG. 8 is a schematic diagram of the compression head 246 of the system 100 of FIG. 1 in accordance with an exemplary aspect of the present disclosure. More particularly, FIG. 8 illustrates a front, cross-sectional view of the top layer 500 extending in the Z-direction and a top view of a portion of the top layer 500, indicated as a contact area 805, extending in the X and Y-directions.

The at least one roller 301, such as the top roller 312, may define a contact area 805 with the top surface 102c of the top layer 500 of the component 102. For example, the contact area 805 depicted illustrates a portion of the top surface 102c of the top layer 500 that may be in contact with the top roller 312 at a given moment during compression. With reference to FIG. 8, the contact area 805 is square or rectangular such that the contact area 805 is defined by a length 810 of the contact area 805 times a width 815 of the contact area 805. However, it should be understood that the contact area 805 may have other geometric shapes based on a size and shape of the load source 144, and the contact area 805 may be determined based on said shape.

Additionally, or alternatively, to determining the target load Y as discussed with respect to expression (1) above, a target pressure load Y' is based on the contact area 805 and the compressive force 300. For example, the target pressure load Y' is based on a contact pressure P, the compressive force F, and a strain k. Moreover, the target pressure load Y' may indicate a target value for residual strain within the component 102. The target pressure load Y' is greater than or equal to 1.2 and less than or equal to 5. For example, the target pressure load Y' may be greater than or equal to 1.8 and less than or equal to 3. The target pressure load Y' is expressed as: ${Y}^{′} = \frac{P}{k}$

The contact pressure P is measured in megapascals (MPa) and relates the compressive force F and a contact area A. The compressive force F of (2) is the same as the compressive force F discussed with respect to expression (1) and measures the maximum force applied to the top surface 102c of the top layer 500 of the component 102 by the deposition head 122 in kilonewtons (kN). For example, the compressive force F is the compressive force 300 applied to the top surface 102c of the top layer 500 of the component 102 by the top roller 312. The contact area A is measured in mm² and includes the contact area 805 shown in FIG. 8. The contact pressure P is expressed as follows: $P = \frac{F}{A}$

The strain k is a dimensionless quantity. In at least one example embodiment, the strain k is greater than or equal to 600 and less than or equal to 1,200. More specifically, the strain k may be greater than or equal to 800 and less than or equal to 1,000.

Further aspects are provided by the subject matter of the following clauses:
A directed energy deposition (DED) additive manufacturing system for manufacturing a component from a material, comprising: a deposition assembly having a deposition head through which material is deposited to form a deposited layer forming a top surface of a component, the top layer defining a width (w) measured in millimeters (mm); and a compression rig comprising a compression head, the compression head configured to apply a compressive force (F) measured in kilonewtons (kN) to the deposited layer of material, and wherein the compression rig defines a target load (Y) equal to: $\frac{F}{w}$; wherein the target load (Y) is greater than or equal to 4 kN/mm and less than or equal to 19 kN/mm.

A directed energy deposition (DED) additive manufacturing system for manufacturing a component from a material, comprising: a deposition assembly having a deposition head through which material is deposited to form a top layer forming a top surface of a component, the top layer defining a width (w) measured in millimeters (mm); and a compression rig comprising a compression head, the compression head configured to apply a compressive force (F) measured in kilonewtons (kN) to the top surface, and wherein the compression rig defines a target load (Y) per unit length equal to: $\frac{F}{w}$; wherein the target load (Y) is greater than or equal to 4 kN/mm and less than or equal to 19 kN/mm.

The DED additive manufacturing system of any preceding clause, wherein the target load (Y) is greater than or equal to 5 kN/mm and less than or equal to 14 kN/mm.

The DED additive manufacturing system of any preceding clause, wherein the compressive force (F) is greater than or equal to 30 kN and less than or equal to 200 kN.

The DED additive manufacturing system of any preceding clause, wherein the compressive force (F) is greater than or equal to 50 kN and less than or equal to 150 kN.

The DED additive manufacturing system of any preceding clause, wherein the width (w) is greater than or equal to 6 mm and less than or equal to 15 mm.

The DED additive manufacturing system of any preceding clause, wherein the width (w) is greater than or equal to 8 mm and less than or equal to 12 mm.

The DED additive manufacturing system of any preceding clause, wherein the compression head comprises at least one roller, and wherein the at least one roller comprises a top roller configured to apply the compressive force (F) onto the top surface of the component.

The DED additive manufacturing system of any preceding clause, wherein the at least on roller further comprises an inside roller configured to contact an interior surface of the component and an outside roller configured to contact an exterior surface of the component.

The DED additive manufacturing system of any preceding clause, further comprising a load cell communicatively coupled to the top roller, the load cell configured to measure the compressive force (F) applied to the top surface of the component.

The DED additive manufacturing system of any preceding clause, wherein the compression head comprises hydraulics, an electric solenoid, or a pneumatic hammer for applying the compressive force (F).

The DED additive manufacturing system of any preceding clause, further comprising a rotary build table that is rotatable about a vertical axis of the rotary build table, the rotary build table defining a horizontal build surface on which the component is supportable.

The DED additive manufacturing system of any preceding clause, wherein the component defines a first distance between a reference line extending perpendicular to the horizontal build surface and an interior surface of the component when the component is supported on the horizontal build surface and a second distance between the reference line and the interior surface of the component when the component is removed from the horizontal build surface, and wherein a difference between the first distance and the second distance defines a deformation of the component.

The DED additive manufacturing system of any preceding clause, wherein the deformation of the component is less than or equal to 0.05 (5%).

The DED additive manufacturing system of any preceding clause, wherein the deformation of the component is less than or equal to 0.01 (1%).

The DED additive manufacturing system of any preceding clause, wherein the material comprises wire.

The DED additive manufacturing system of any preceding clause, wherein the deposition head includes an energy source.

The DED additive manufacturing system of any preceding clause, wherein the energy source comprises an electric arc heat source.

The DED additive manufacturing system of any preceding clause, wherein the component comprises a cylindrical, conical, or polygonal shape.

The DED additive manufacturing system of any preceding clause, wherein the component comprises an aircraft component or a gas turbine engine component.

A method of manufacturing a component, the method comprising: depositing a stream of material via a deposition head onto a build surface, the stream of material defining a width (w) measured in millimeters (mm); and applying a target load (Y) to a surface of the component via a compression head, the target load (Y) based on a compressive force (F) exerted onto a top surface of the component by the compression head and the width (w); wherein the target load (Y) is equal to: $\frac{F}{w}$; and wherein the target load (Y) is greater than or equal to 4 kN/mm and less than or equal to 19 kN/mm.

The method of any preceding clause, wherein: the compressive force (F) is greater than or equal to 30 kN and less than or equal to 200 kN; and the width (w) is greater than or equal to 6 mm and less than or equal to 15 mm.

The method of any preceding clause, wherein the compression head comprises at least one roller, and wherein the applying the target load (Y) to the component comprises rolling a top surface of the component with the at least one roller.

A directed energy deposition (DED) additive manufacturing system for manufacturing a component from a material, comprising: a deposition assembly having a deposition head through which material is deposited to form a top layer forming a top surface of a component, the deposited layer defining a width (w) measured in millimeters (mm) and a strain (k); and a compression rig comprising a compression head, the compression head configured to apply a contact pressure (P) to the top surface of the component, wherein the contact pressure (P) is based on a compressive force (F) measured in kilonewtons (kN) applied to a contact area (A) of the top surface of the component, and wherein the compression rig defines a target pressure load (Y') equal to: ${Y}^{′} = \frac{P}{k}$; wherein the target pressure load (Y') is greater than or equal to 1.2 and less than or equal to 5.

The DED additive manufacturing system of claim 21, wherein the target pressure load (Y') is greater than or equal to 1.8 and less than or equal to 3.

The DED additive manufacturing system of claim 21, wherein the contact pressure P is equal to: $P = \frac{F}{A}$.

The DED additive manufacturing system of claim 21, wherein the strain k is greater than or equal to 600 and less than or equal to 1,200.

The DED additive manufacturing system of claim 21, wherein the strain k is greater than or equal to 800 and less than or equal to 1,000.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A directed energy deposition (DED) additive manufacturing system (100) for manufacturing a component (102) from a material, comprising:
a deposition assembly (120) having a deposition head (122) through which material is deposited to form a top layer forming a top surface (102c) of a component (102), the top layer defining a width (w) measured in millimeters (mm); and
a compression rig (140) comprising a compression head (246), the compression head (246) configured to apply a compressive force (F) measured in kilonewtons (kN) to the top surface, and wherein the compression rig (140) defines a target load (Y) equal to: $\frac{F}{w} ;$
wherein the target load (Y) is greater than or equal to 4 kN/mm and less than or equal to 19 kN/mm.

2. The DED additive manufacturing system (100) of claim 1, wherein the target load (Y) is greater than or equal to 5 kN/mm and less than or equal to 14 kN/mm.

3. The DED additive manufacturing system (100) of any preceding claim, wherein the width (w) is greater than or equal to 6 mm and less than or equal to 15 mm.

4. The DED additive manufacturing system (100) of any preceding claim, wherein the compression head (246) comprises at least one roller (301), and wherein the at least one roller (301) comprises a top roller (312) configured to apply the compressive force (F) onto the top surface (102c) of the component (102).

5. The DED additive manufacturing system (100) of any preceding claim, wherein the compression head (246) comprises hydraulics, an electric solenoid, or a pneumatic hammer for applying the compressive force (F).

6. The DED additive manufacturing system (100) of any preceding claim, further comprising a rotary build table (104) that is rotatable about a vertical axis of the rotary build table (104), the rotary build table (104) defining a horizontal build surface (106) on which the component (102) is supportable.

7. The DED additive manufacturing system (100) of claim 6, wherein the component (102) defines a first distance (D1) between a reference line (505) extending perpendicular to the horizontal build surface (106) and an interior surface of the component (102) when the component (102) is supported on the horizontal build surface (106) and a second distance (D2) between the reference line (505) and the interior surface of the component (102) when the component (102) is removed from the horizontal build surface (106), and wherein a difference between the first distance (D1) and the second distance (D2) defines a deformation of the component (102).

8. The DED additive manufacturing system (100) of claim 7, wherein the deformation of the component (102) is less than or equal to 0.05 (5%).

9. The DED additive manufacturing system (100) of any preceding claim, wherein the material comprises wire (134).

10. The DED additive manufacturing system (100) of any preceding claim, wherein the deposition head (122) includes an energy source (130); and wherein the energy source (130) comprises an electric arc heat source.

11. The DED additive manufacturing system (100) of any preceding claim, wherein the component (102) comprises a cylindrical, conical, or polygonal shape.

12. The DED additive manufacturing system (100) of any preceding claim, wherein the component (102) comprises an aircraft component or a gas turbine engine component.

13. A method (700) of manufacturing a component (102), the method (700) comnprising:
depositing a stream of feedstock material via a deposition head (122) onto a build surface (106), the stream of feedstock material defining a width (w) measured in millimeters (mm); and
applying a target load (Y) to a top surface of the component (102) via a compression head (246), the taregt load (Y) based on a compressive force (F) exerted onto the top surface (102c) of the component (102) by the compression head (246) and the width (w);
wherein the target load (Y) is equal to: $\frac{F}{w} ;$ and
wherein the target load (Y) is greater than or equal to 4 kN/mm and less than or equal to 19 kN/mm.

14. The method (700) of claim 13, wherein:
the compressive force (F) is greater than or equal to 30 kN and less than or equal to 200 kN; and
the width (w) is greater than or equal to 6 mm and less than or equal to 15 mm.

15. The method (700) of any of claims 13-14, wherein the compression head (246) comprises at least one roller (301), and wherein the applying the target load (Y) to the component (102) comprises rolling the top surface (102c) of the component (102) with the at least one roller (301).
